# EUROPEAN PATENT APPLICATION

(11) **EP 4 431 340 A1**
(43) Date of publication of application: **18.09.2024**
(21) Application number: 22891682.1
(22) Date of filing: 27.09.2022
(51) Int. Cl.: B60R 1/27, G06F 8/60, G07C 5/08

(54) **VEHICLE ENTERTAINMENT INFORMATION DOMAIN CONTROLLER AND DRIVING RECORD GENERATION METHOD**

(30) Priority: 11.11.2021 CN 202111330644
(71) Applicant: Guangzhou Automobile Group Co. Ltd., Guangzhou, Guangdong 510030 (CN)
(72) Inventor: LIU, Qiangshou, Guangzhou, Guangdong 511434 (CN); DAI, Jishun, Guangzhou, Guangdong 511434 (CN); DENG, Ao, Guangzhou, Guangdong 511434 (CN); REN, Chong, Guangzhou, Guangdong 511434 (CN); JIANG, Jianhui, Guangzhou, Guangdong 511434 (CN); SHI, Ruihao, Guangzhou, Guangdong 511434 (CN)
(74) Representative: Zaboliene, Reda
(86) International application number: PCT/CN2022/121714
(87) International publication number: WO 2023/082880

(57) **Abstract**

A vehicle entertainment information domain controller and a driving record generation method. The vehicle entertainment information domain controller comprises: a video decoding module, which is used for acquiring a plurality of video signals of a vehicle surround view monitor, which are input via an input end of the controller, and decoding the plurality of video signals to obtain a plurality of decoded video signals; a QNX system, which is used for receiving the plurality of decoded video signals, and sending same to a hardware virtualizer; the hardware virtualizer, which is used for receiving the plurality of decoded video signals, and sending the plurality of decoded video signals to an Android system; and the Android system, which is used for receiving the plurality of decoded video signals, receiving an in-vehicle audio signal, performing signal mixing processing on the plurality of decoded video signals and the in-vehicle audio signal, so as to generate a driving record, and outputting the driving record to an internal storage module or an external storage module for storage. The QNX system and the Android system share the memory of the hardware virtualizer, therefore there is no need to independently provide a DVR as a driving recorder, thereby reducing the cost of the whole vehicle.

## Description

This present application claims the priority of the Chinese patent application submitted to the Chinese Patent Office on November 11, 2021, with the application number 202111330644.3, and the title of the application is "VEHICLE ENTERTAINMENT INFORMATION DOMAIN CONTROLLER AND DRIVING RECORD GENERATION METHOD", the content of which is hereby incorporated fully by reference herein into the present application.

### FIELD

The present application relates to the technical field of vehicle driving records, in particular to an entertainment information domain controller of a vehicle and a driving record generation method.

### BACKGROUND

A driving recorder is an instrument for recording videos and sounds during a driving of a vehicle. After the driving recorder is installed, it can record video images and sounds during an entire driving process of the vehicle, which can provide evidence for traffic accidents; it can be used to record a process of conquering difficulties and obstacles for a person who likes self-drive tours; the video is recorded while driving, and the time, the speed, and the location are recorded in the video at the same time, which is quite a "black box". At present, the driving recorder of the vehicle is generally an independent hard disk video recorder (DVR), which is a computer system capable of storing images and processing images. It is equipped with an independent camera and an independent controller, records images/voices for a long time, and has functions of remotely monitor and control. However, since the DVR is equipped with the independent camera and the independent controller, it increases an overall cost of the vehicle, and since the DVR records images only using a front camera, and there is no way to record images in left, right, and rear of the vehicle.

At present, the panoramic image system SVM (surround view monitor) and entertainment information system are more and more used in vehicles, and SVM is mainly used for automatic or assisted parking of vehicles. SVM has image shooting functions in four directions including the front, rear, left, and right. The computing and image processing capabilities of an entertainment information domain controller of the infotainment system are also very powerful. Therefore, it can be considered to realize the function of the driving recorder based on the functions already configured in the SVM and the entertainment information domain controller, without setting up a DVR independently as a driving recorder, thereby reduces cost of the vehicle, and can realize driving panoramic video recording. No related technology exists before inventors of the present application puts forward this idea.

### SUMMARY

The purpose of the present application is to provide an entertainment information domain controller of a vehicle and a driving record generation method, considering the functions of the configured panoramic image system SVM and the entertainment information domain controller to realize the function of the driving recorder without setting a separate DVR as a driving recorder, thereby reducing the cost of the vehicle, and can realize video recording of driving panoramic.

In order to realize the purpose, an entertainment information domain controller of a vehicle is provided, and the entertainment information domain controller of the vehicle comprises: a video decoding module, being used for acquiring a plurality of video signals of a panoramic image system of a vehicle which is input from an input terminal of the controller, and obtaining decoded video signals by decoding the plurality of video signals; a QNX system, being used for receiving the decoded video signals, and sending at least one decoded video signal to a hardware virtualizer; the hardware virtualizer, being used for receiving the at least one decoded video signal, and sending the at least one decoded video signal to an Android system; the Android system, being used for receiving the at least one decoded video signal; and receiving internal audio signals; and generating a driving record by performing a signal mixing processing on the at least one decoded video signal and the internal audio signals, and finally outputting the driving record to an internal storage module or an external storage module for storage; wherein, the QNX system and the Android system share a memory of the hardware virtualizer.

Preferably, the entertainment information domain controller of the vehicle further comprises a video encoding module; the QNX system is further used for obtaining panoramic video signals by splicing the decoded video signals; the video encoding module is used for obtaining the panoramic video signals and encoding the panoramic video signals when the controller receives a user request for displaying the panoramic video signals, and then outputting the encoded panoramic video signals to a display screen inside the vehicle for display through an output terminal of the controller.

Preferably, the plurality of video signals comprise a front video signal, a rear video signal, a left video signal and a right video signal captured by cameras of the vehicle in real time; both the input terminal and the output terminal of the controller are mini fakra 4 in 1 connectors.

Preferably, the video decoding module is an LVDS decoder, and the video encoding module is an LVDS encoder.

Preferably, the entertainment information domain controller of the vehicle further comprises a DSP chip; the DSP chip is used for receiving the internal audio signals input by an audio collection device, performing a processing of noise reduction on the internal audio signals, and outputting the internal audio signals to the Android system after the internal audio signals have been performed the processing of noise reduction, so as to generate the driving record by performing a signal mixing processing on the internal audio signals and the decoded video signals; wherein the audio collection device is configured inside the vehicle.

Preferably, the external storage module is a U disk, a memory card or a cloud server; wherein, the U disk is connected to the entertainment information domain controller of the vehicle through a USB interface; wherein, the memory card is connected to the entertainment information domain controller of the vehicle through a memory card interface; wherein, the cloud server and the entertainment information domain controller of the vehicle are connected through a network through a in-vehicle Tbox, the entertainment information domain controller of the vehicle outputs the driving record to the in-vehicle Tbox, and the in-vehicle Tbox outputs the driving record to the cloud server through the network for storage.

Preferably, the Android system is used for performing a video frame extraction, a compression and a format conversion on the driving record in sequence after the driving record is generated, and then outputting the driving record that has been performed the format conversion to the internal storage module or the external storage module for storage.

The embodiment of the present application further provides a driving record generation method, the method is realized based on the entertainment information domain controller of the vehicle, and the method comprises: step S100, the video decoding module acquiring a plurality of video signals of the panoramic image system of the vehicle which is input from the input terminal of the controller, and obtaining decoded video signals by decoding the plurality of video signals; step S200, the QNX system receiving the decoded video signals, and sending at least one decoded video signal to the hardware virtualizer; step S300, the hardware virtualizer receiving the at least one decoded video signal, and sending the at least one decoded video signal to the Android system; step S400, the Android system receiving the at least one decoded video signal; receiving the internal audio signals; performing a signal mixing processing on the at least one decoded video signal and the internal audio signals to generate a driving record, and finally outputting the driving record to an internal storage module or an external storage module for storage.

Preferably, the step S400 comprises: firstly performing the video frame extraction, the compression and the format conversion on the driving record in sequence after the Android system generates the driving record, and then outputting the driving record that has been performed the format conversion to the internal storage module or the external storage module for storage.

Preferably, the step S200 further comprises: the QNX system obtaining panoramic video signals by splicing the decoded video signals; the video encoding module acquiring, when the controller receives the user request for displaying panoramic video signals, the panoramic video signals and encoding the panoramic video signals, and outputting the encoded panoramic video signals to the display screen inside the vehicle for display through the output terminal of the controller.

Embodiments of the present application have at least the following beneficial effects: the embodiment of this application implements the function of the driving recorder based on the functions of the panoramic image system SVM (SVM-Surround View Monitor) and the entertainment information domain controller (that is, a controller of the AVNT system of the vehicle) that have been configured in the vehicle. The entertainment information domain controller is divided into a QNX system and an Android system. The QNX system is responsible for splicing the plurality of video signals of the SVM to obtain panoramic video signals and completing the related processes of the SVM. The Android system is responsible for performing a signal mixing processing on the plurality of video signals of the SVM and the vehicle's audio signal in the vehicle collected by the audio collection device (such as a microphone) to obtain the driving record, and finally the driving record is output to an internal storage module or an external storage module for storage, so that there is no need to independently set up a DVR as a driving recorder, and can realize a video recording of driving panorama, make full use of video processing and computing capabilities of the entertainment information domain controller, and reduce the cost of the vehicle to the greatest extent. The entire processing scheme is reasonable and efficient, and avoids DVR excessive resource consumption causes a system crash.

Additional features and advantages of embodiments of the present application will be described in the following.

### BRIEF DESCRIPTION OF THE DRAWINGS

In order to more clearly illustrate the technical solutions in the embodiments of the present application or the prior art, the following will briefly introduce drawings that need to be used in the description of the embodiments or the prior art. Obviously, the accompanying drawings in the following description are only some embodiments of the present application. Those skilled in the art can also obtain other drawings based on these drawings without creative work.
FIG. 1 is a schematic diagram of a common solution for DVR in the existing market.
FIG. 2 is a structural diagram of an entertainment information domain controller of a vehicle in an embodiment of the present application.
FIG. 3 is a flow chart of a method for generating a driving record in an embodiment of the present application.
FIG. 4 is a schematic diagram of a principle of frame extraction in the embodiment of the present application.

### DETAILED DESCRIPTION

Various exemplary embodiments, features, and aspects of the present disclosure will be described in detail below with reference to the accompanying drawings. In addition, in order to better illustrate the present application, numerous specific details are given in the following specific examples. It will be understood by those skilled in the art that the present application may be realized without certain of the specific details. In some embodiments, means well known to those skilled in the art are not described in detail in order to highlight the gist of the present application.

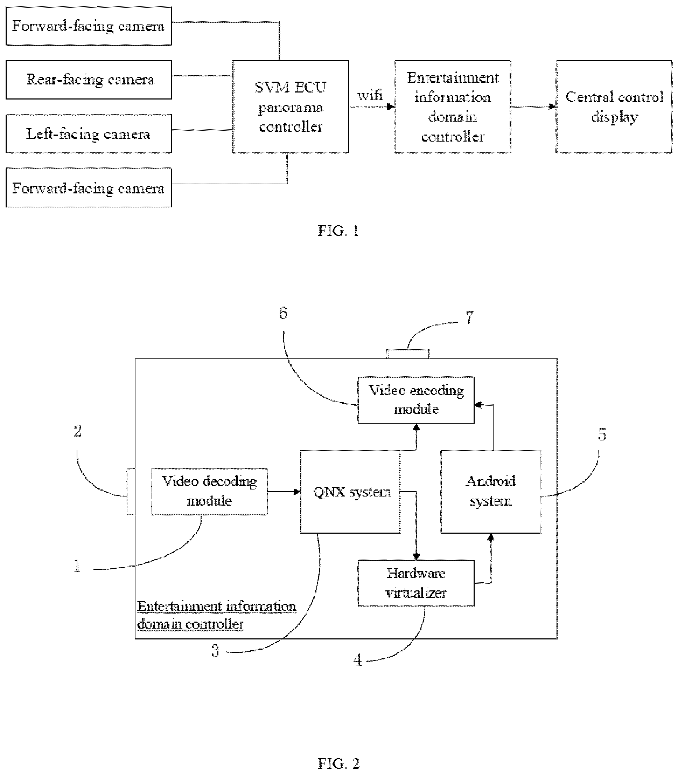

Referring to FIG. 2, the embodiment of the present application provides the entertainment information domain controller of the vehicle, including a video decoding module 1, a QNX system 3, a hardware virtualizer 4 (Hypervisor) and an Android system 5;

The video decoding module 1 is used to obtain a plurality of video signals of the panoramic image system SVM of a vehicle input by an input terminal 2 of the controller, and obtain decoded video signals by decoding the plurality of video signals; Specifically, in the embodiment of the present application, videos input by a four-way SVM camera are preferably used for DVR storage, and the plurality of video signals include front video signal, rear video signal, left video signal and right video signal captured by cameras of the vehicle in real time, correspondingly, the cameras of the vehicle includes a forward-facing camera arranged at the front of the vehicle, a rear-facing camera arranged at the rear of the vehicle, a left-facing camera arranged on the left side of the vehicle, and a right-facing camera arranged on the left side of the vehicle; it needs to be explained that, in the embodiment of the present application, it is also possible to select videos of a single camera for DVR storage, for example, only select the forward-facing camera, that is, video signals of only one camera are invoked when generating a driving record in the Android system 5, but in this case, the driving record is relatively incomplete; other cameras connected to a host can also be used, such as AR cameras, etc., but it should be noted that cameras of the SVM is selected in the embodiment of this application because they are arranged in QNX system 3, so after the vehicle starts for 1-2s, the DVR storage can be performed. If the AR cameras or other cameras are used, because they are installed in Android system 5, DVR can't achieve fast startup. According to startup time of Android system 5, DVR can start for storage after about 15-20s, when customers get on the vehicle and start the vehicle to run immediately, videos of collision may not be recorded;

The QNX system 3 is used to receive the decoded video signals, and send at least one decoded video signal of the decoded video signals to the hardware virtualizer 4; specifically, the decoded video signals enter the QNX system 3 of the entertainment information domain controller through a CSI hardware interface of a SOC chip of the entertainment information domain controller, and the QNX system 3 is mainly applied to a management/control of components in an instrumentation field of the vehicle;

The hardware virtualizer 4 is used to receive the at least one decoded video signal, and send the at least one decoded video signal to the Android system 5; specifically, the hardware virtualizer 4 refers to a middle-layer software running between a physical server and an operating system, which can allow a plurality of operating systems and applications to share a set of basic physical hardware. In the embodiment of the present application, the hardware virtualizer 4 is configured to realize the QNX system 3 share a memory of the hardware virtualizer 4 with the Android system 5, and realize a cross-system transmission of video signals by the hardware virtualizer 4;

The Android system 5 is used to receive the at least one decoded video signal; and receive internal audio signals; and generate a driving record by performing a signal mixing processing on the at least one decoded video signal and the internal audio signals, and finally output the driving record to an internal storage module or an external storage module for storage;

Specifically, the decoded video signals enter the Android system 5 through a shared memory. This is because the DVR needs to store video signals. According to a typical architecture of the QNX system 3, it does not have a capability of storing video signals. Therefore, the storing of video signals needs to be carried out at the Android system 5, and the decoded video signals are mixed with the internal audio signals to obtain the driving record containing a plurality of perspectives, so as to realize recording images of the left, right and rear of the vehicle. At the same time, there is no need to independently configure a DVR as a driving recorder to realize video recording of driving panorama, make full use of video processing and computing capabilities of the entertainment information domain controller, and reduce the cost of the vehicle to the greatest extent. The entire processing scheme is reasonable and efficient, and avoids DVR excessive resource consumption causes a system crash.

Specifically, in the embodiment of the present application, a video encoding module 6 is also included;

The QNX system 3 is further used to obtain panoramic video signals by splicing the decoded video signals; specifically, the decoded video signals are performed with image data splitting in the QNX system 3, one of the decoded video signals enters the Android system 5 through the shared memory to generate the driving record, and the other of the decoded video signals stays in the QNX system 3 for splicing, and continues to complete relevant processes of SVM; in the prior art, generally an independent ECU is configured for complete the relevant processes of SVM, but in the embodiment of the present application, it is completed by the QNX system 3 of the entertainment information domain controller, so that there is no need to independently add an ECU;

The video encoding module 6 is used to acquire the panoramic video signals and encode the panoramic video signals, and output the encoded panoramic video signals to the display screen inside the vehicle for display through the output terminal of the controller, when the controller receives a user request for displaying the panoramic video signals; specifically, the user request for displaying the panoramic video signals refers to a request for reversing assistance or displaying SVM image.

Specifically, in the embodiment of the present application, the input terminal 2 and the output terminal 7 of the controller are preferably, but not limited to mini fakra 4 in 1 connectors.

Specifically, in the embodiment of the present application, the video decoding module 1 is preferably, but not limited to an LVDS decoder, and the video encoding module 6 is preferably, but not limited to an LVDS encoder.

Specifically, in the embodiment of the present application, a DSP chip is also included;

The DSP chip is used to receive the internal audio signals input by an audio collection device, perform a processing of noise reduction on the internal audio signals, and output the internal audio signals to the Android system 5 after the internal audio signals have been performed the processing of noise reduction, so that the Android system 5 can perform a signal mixing processing on the internal audio signals and the decoded video signals to generate the driving record; wherein the audio collection device is configured inside the vehicle; specifically, for collecting the internal audio signals, in order to reducing cost, the audio collection device may be a vocal microphone used for a driver.

Specifically, in the embodiment of the present application, the external storage module can be a U disk, a memory card or a cloud server, that is, there may be four storage solutions in the embodiment of the present application, and different storage solutions may appear in one embodiment at the same time;

In a first storage solution, the driving record is stored in the internal storage module of the entertainment information domain controller, such as UFS, EMMC; when a user of the vehicle needs to view the driving record, the user inputs a viewing request, and the Android system 5 retrieves the driving record from the internal storage module according to the viewing request and outputs the driving record to the video encoding module 6. After the video encoding module 6 encodes the video signals of the driving record, the encoded video signals passes through an output terminal 7 of the controller, and the encoded video signals are output to a display screen inside the vehicle for display; it should be noted that since the DVR is a process of continuous storage and continuous updating, the storage medium has limitations in storage life and flashing times, and the DVR is stored in the internal storage module of the entertainment information domain controller, there is a high probability that the memory of the entertainment information domain controller will be damaged after about 3-5 years, and causing the controller fail to work; as the controller may be damaged, as a preference, it is necessary to set a DVR soft switch on a HMI interface of the vehicle, and when the user selects the internal storage module to store the driving record, a prompt message is output to inform the user that a risk exists; therefore, an external storage solution is preferably used in the embodiment of the present application;

In a second storage solution, the U disk is connected to the entertainment information domain controller of the vehicle through a USB interface, and the driving record is output through the USB interface and stored in the U disk; specifically, in the embodiment of the present application, storage using the U disk is preferred, because the entertainment information domain controller usually designs the USB interface in order to realize mobile phone interconnection and charging, so the storage using the U disk does not need to be modified, and other costs cannot be increased on a basis of existing hardware; it is understandable that, based on a storage method using the U disk, the user of the vehicle can connect the U disk to other devices, such as a computer, to view the driving record. If the user wants to view the driving record on the vehicle, the user inputs a viewing request, and the Android system 5 retrieves the driving record from the U disk according to the viewing request, and output the driving record to the video coding module 6, after the video coding module 6 encodes the video signals of the driving record, the encoded video signals are output to the display screen inside the vehicle through the output terminal 7 of the controller;

In a third storage solution, the memory card is connected to the entertainment information domain controller of the vehicle through a memory card interface. Specifically, an external memory card interface can be added to the entertainment information domain controller or the USB interface of the entertainment information domain controller can be converted into a memory card interface through a wire harness. In this solution, the driving record is output through the memory card interface and stored in the memory card; it can be understood that the storage method based on the memory card, the user of the vehicle can connect the memory card to other devices, such as a computer, to view the driving record. If the user wants to view the driving record in the vehicle, the user inputs a viewing request, and the Android system 5 retrieves the driving record from the memory card according to the viewing request, and outputs to the video encoding module 6, after the video encoding module 6 encodes the video signals of the driving record, the encoded video signals are output to the display screen inside the vehicle through the output terminal 7 of the controller for display;

In a fourth storage solution, the cloud server is connected to the entertainment information domain controller of the vehicle through a network through a in-vehicle Tbox, and the entertainment information domain controller of the vehicle outputs the driving record to the in-vehicle Tbox, and the in-vehicle Tbox sends the driving record to the cloud server via the network for storage; among them, the user of the vehicle can download the driving record to a smart terminal such as a mobile phone for viewing through an APP of a vehicle factory.

Specifically, in the embodiment of the present application, the Android system 5 is specifically used to perform video frame extraction, a compression, and a format conversion on the driving record in sequence after generating the driving record, so as to reduce a video capacity of the driving record and then output the driving record that has been performed the format conversion to an internal storage module or an external storage module for storage.

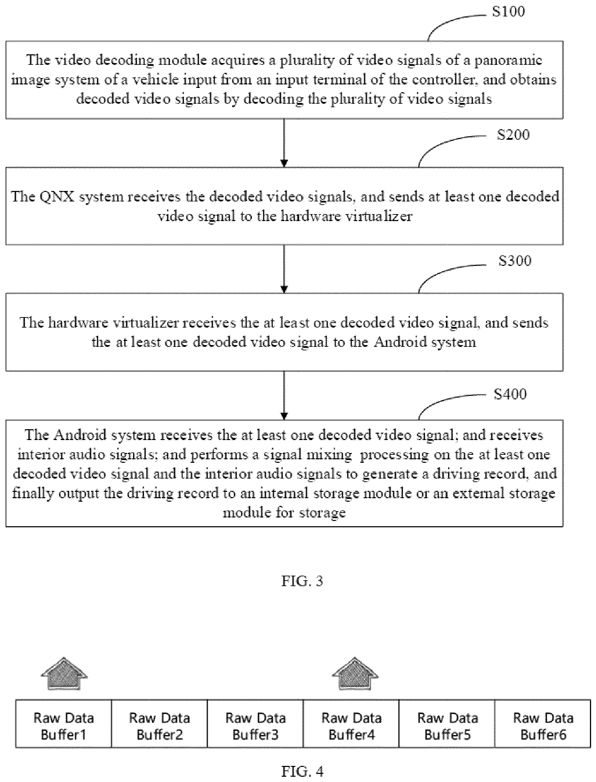

For example, four-way SVM camera is a high-definition camera. A resolution of one frame of image is 1920* 1080, a format is ARGB_8888, one pixel occupies 4 bites, and a transmission frame rate is 30fps. After the SVM image is input to the SOC, it is frame-buffered in a RAM area in a form of raw data, 6 buffers are configured in a cache queue, and each buffer stores a frame of raw data, and a video storage management module is configured to only read the raw data of the 1st and 4th buffers, as shown in FIG. 3, where, a size of a single frame image is: 1920* 1080*4/1024/1024=7.91M; a size of an image per second is: 7.91*30=237.3M; a size of an image per second after frame extraction is: 237.3/3=79.1M ;

The compression needs to be calculated according to a configured code rate of the SOC chip of the entertainment information domain controller. If a code rate is configured to be 5Mbit, and a video format is converted from ARGB_8888 to MP4 format at the same time, a compression ratio of two operations is about 126.6, then the image size per second after compression is: 79.1/126.6=0.62M; assuming that a vehicle drives for 4 hours a day on average, and the U disk purchased by a customer is 64G, a daily storage size is 8.93G, and the entertainment information domain controller can set a replacement period for stored video: week/time, that is, 0.62*60*60*4=8928M=8.93G.

It can be understood that, when the Android system processes video signals and audio signals, it needs to start corresponding drivers for execution, such as virtual camera drivers, audio drivers, USB drivers, and the like.

The embodiment of this application implements the function of the driving recorder based on the functions of the panoramic image system SVM (SVM-Surround View Monitor) and the entertainment information domain controller (that is, a controller of the AVNT system of the vehicle) that have been configured in the vehicle. The entertainment information domain controller is divided into a QNX system and an Android system. The QNX system is responsible for splicing the plurality of video signals of the SVM to obtain panoramic video signals and completing the related processes of the SVM. The Android system is responsible for performing a signal mixing processing on the plurality of video signals of the SVM and the internal audio signals in the vehicle collected by the audio collection device (such as a microphone) in the vehicle to obtain the driving record, and finally the driving record is output to an internal storage module or an external storage module for storage, so that there is no need to independently set up a DVR as a driving recorder, and can realize a video recording of driving panorama, make full use of video processing and computing capabilities of the entertainment information domain controller, and reduce the cost of the vehicle to the greatest extent. The entire processing scheme is reasonable and efficient, and avoids DVR excessive resource consumption causes a system crash.

Referring to FIG. 4, another embodiment of the present application also proposes a method of generating a driving record, which is implemented based on the entertainment information domain controller of the vehicle described in the above embodiment, and the method in this embodiment includes:
Step S100, the video decoding module acquires a plurality of video signals of the panoramic image system of the vehicle input from the input terminal of the controller, and obtains decoded video signals by decoding the plurality of video signals;
Step S200, the QNX system receives the decoded video signals, and sends at least one decoded video signal to the hardware virtualizer;
Step S300, the hardware virtualizer receives the at least one decoded video signal, and sends the at least one decoded video signal to the Android system;
Step S400, the Android system receives the at least one decoded video signal; and receives the internal audio signals; and performs a signal mixing processing on the at least one decoded video signal and the internal audio signals to generate a driving record, and finally output the driving record to an internal storage module or an external storage module for storage.

Specifically in this embodiment, the step S400 specifically includes:
After the Android system generates the driving record, the video frame extraction, the compression and the format conversion are firstly performed on the driving record in sequence, and then the driving record that has been performed the format conversion is output to an internal storage module or an external storage module for storage.

Specifically in this embodiment, the step S200 further includes:
The QNX system splices the decoded video signals to obtain panoramic video signals;
When the controller receives the request for displaying panoramic video signals from the user, the video encoding module acquires the panoramic video signals and encodes the panoramic video signals, and outputs the encoded panoramic video signals to the display screen inside the vehicle for display through the output terminal of the controller.

It should be noted that the methods in the above embodiments correspond to the controller in the above embodiments, therefore, parts of the methods in the above embodiments that are not described in detail can be obtained by referring to the content of the controller in the above embodiments, and will not be repeated here.

Having described various embodiments of the present application above, the foregoing description is exemplary, not exhaustive, and is not limited to the disclosed embodiments. Many modifications and alterations will be apparent to those of ordinary skill in the art without departing from the scope and spirit of the described embodiments. The terminology used herein is chosen to best explain the principle of each embodiment, practical application or technical improvement in the market, or to enable other ordinary skilled in the art to understand each embodiment disclosed herein

## Claims

1. An entertainment information domain controller of a vehicle, **characterized in that**, the entertainment information domain controller of the vehicle comprises:
a video decoding module, being used for acquiring a plurality of video signals of a panoramic image system of the vehicle which is input from an input terminal of the controller, and obtaining decoded video signals by decoding the plurality of video signals;
a QNX system, being used for receiving the decoded video signals, and sending at least one decoded video signal to a hardware virtualizer;
the hardware virtualizer, being used for receiving the at least one decoded video signal, and sending the at least one decoded video signal to an Android system;
the Android system, being used for receiving the at least one decoded video signal; receiving internal audio signals; generating a driving record by performing a signal mixing processing on the at least one decoded video signal and the internal audio signals, and finally outputting the driving record to an internal storage module or an external storage module for storage;
wherein, the QNX system and the Android system share a memory of the hardware virtualizer.

2. The entertainment information domain controller of the vehicle according to claim 1, further comprising a video encoding module, wherein :
the QNX system is further used for obtaining panoramic video signals by splicing the decoded video signals;
the video encoding module is used for obtaining the panoramic video signals and encoding the panoramic video signals when the controller receives a user request for displaying the panoramic video signals, and outputting the encoded panoramic video signals to a display screen inside the vehicle for display through an output terminal of the controller.

3. The entertainment information domain controller of the vehicle according to claim 2, wherein the plurality of video signals comprise a front video signal, a rear video signal, a left video signal and a right video signal captured by cameras of the vehicle in real time;
both the input terminal and the output terminal of the controller are mini fakra 4 in 1 connectors.

4. The entertainment information domain controller of the vehicle according to claim 2, wherein the video decoding module is an LVDS decoder, and the video encoding module is an LVDS encoder.

5. The entertainment information domain controller of the vehicle according to claim 1, further comprising a DSP chip;
the DSP chip is used for receiving the internal audio signals input by an audio collection device, performing a processing of noise reduction on the internal audio signals, and outputting the internal audio signals to the Android system after the internal audio signals have been performed the processing of noise reduction, so as to generate the driving record by performing a signal mixing processing on the internal audio signals and the decoded video signals; wherein the audio collection device is configured inside the vehicle.

6. The entertainment information domain controller of the vehicle according to claim 1, wehrein the external storage module is a U disk, a memory card or a cloud server;
wherein, the U disk is connected to the entertainment information domain controller of the vehicle through a USB interface;
wherein, the memory card is connected to the entertainment information domain controller of the vehicle through a memory card interface;
wherein, the cloud server and the entertainment information domain controller of the vehicle are connected through a network through a in-vehicle Tbox, the entertainment information domain controller of the vehicle outputs the driving record to the in-vehicle Tbox, and the in-vehicle Tbox outputs the driving record to the cloud server through the network for storage.

7. The entertainment information domain controller of the vehicle according to claim 1, wherein the Android system is used for performing a video frame extraction, a compression and a format conversion on the driving record in sequence after the driving record is generated, and then outputting the driving record that has been performed the format conversion to the internal storage module or the external storage module for storage.

8. A driving record generation method, **characterized in that**, the method is realized based on the entertainment information domain controller of the vehicle according to any one of claims 1 to 7, and the method comprises:
step S100, the video decoding module acquiring a plurality of video signals of the panoramic image system of the vehicle which is input from the input terminal of the controller, and obtaining decoded video signals by decoding the plurality of video signals;
step S200, the QNX system receiving the decoded video signals, and sending at least one decoded video signal to the hardware virtualizer;
step S300, the hardware virtualizer receiving the at least one decoded video signal, and sending the at least one decoded video signal to the Android system;
step S400, the Android system receiving the at least one decoded video signal; receiving the internal audio signals; performing a signal mixing processing on the at least one decoded video signal and the internal audio signals to generate a driving record, and finally outputting the driving record to an internal storage module or an external storage module for storage.

9. The driving record generation method according to claim 9, wherein the step S400 comprises:
firstly performing the video frame extraction, the compression and the format conversion on the driving record in sequence after the Android system generates the driving record, and then outputting the driving record that has been performed the format conversion to the internal storage module or the external storage module for storage.

10. The driving record generation method according to claim 8, wherein the step S200 further comprises:
the QNX system obtaining panoramic video signals by splicing the decoded video signals;
the video encoding module acquiring, when the controller receives the user request for displaying panoramic video signals, the panoramic video signals and encoding the panoramic video signals, and outputting the encoded panoramic video signals to the display screen inside the vehicle for display through the output terminal of the controller.
